# EUROPEAN PATENT SPECIFICATION

(11) **EP 1 679 288 B1**
(45) Date of publication and mention of the grant of the patent: **23.03.2011**
(21) Application number: 04792900.5
(22) Date of filing: 19.10.2004
(51) Int. Cl.: C03B 5/225, C03C 3/00

(54) **METHOD FOR PRODUCING GLASS ARTICLE**
VERFAHREN ZUR HERSTELLUNG EINES GLASGEGENSTANDS
PROCEDE DE FABRICATION D'ARTICLE EN VERRE

(30) Priority: 20.10.2003 JP 2003358629
(43) Date of publication of application: 12.07.2006
(73) Proprietor: NIPPON ELECTRIC GLASS CO., LTD, Otsu-shi, Shiga 520-8639 (JP)
(72) Inventor: AOKI, Shigeaki., Nippon Electric Glass Co., Ltd., Otsu-shi, Shiga 520-8639 (JP); NAGAI, Hiroki, Nippon Electric Glass Co., Ltd., Otsu-shi, Shiga 520-8639 (JP); TAKAGI, Masataka, Nippon Electric Glass Co., Ltd, Otsu-shi, Shiga 520-8639 (JP)
(74) Representative: Tetzner, Michael
(86) International application number: PCT/JP2004/015763
(87) International publication number: WO 2005/037721

(56) References cited:
- EP-A- 1 473 284
- DE-A1- 19 746 715
- JP-A- 9 015 147
- JP-A- 62 223 028
- JP-A- 62 223 028
- JP-A- 2001 520 763
- JP-A- 2003 335 526
- JP-A- 2004 091 307
- US-A- 3 622 296
- US-A- 3 929 440
- US-A- 5 446 008

## Description

The present invention relates to a method of producing a glass article.

In the production of glass articles the degree to which the structure of glass to be produced can be brought into a homogeneous state is important.

The measures of the degree of homogeneity of glass depend on the dimensions of a glass structure to which attention is paid, and the dimensions vary depending on the applications of the glass and its required quality. The measures are roughly classified into three stages in an academic sense. Of those, a measure referred to as a short-range order in dependence on the orientation direction of atomic arrangement (also referred to as a short-range structure) is the smallest measure. Next, a medium-range order is constituted by combining the short-range orders. In addition, a long-range order larger than the medium-range order corresponds to a distance in excess of 1 nm. When a glass structure is interpreted as a short-range order or a medium-range order, any kind of glass has a structural feature in dependence on its composition, so it is hard to represent the glass by means of the concept that the structure of the glass is in a homogeneous state. Therefore, the concept of homogeneity is applicable to the case where a dimension larger than 1 nm in excess of a medium-range order is taken into consideration.

In a commercial production stage, the presence of a vapor phase in a liquid phase (so-called the presence of a bubble in glass) is largely responsible for a significant reduction in degree of homogeneity of the glass. In addition, even when the problem of a bubble can be avoided, depending on glass composition, a devitrification phenomenon in association with the precipitation of a crystal from molten glass may occur owing to thermal hysteresis, or a dissimilar glass phase having two or more different compositions is obtained. That is, attention must also be paid to a phenomenon referred to as phase splitting. Glass defects referred to as a cord, a knot, a stripe, and the like have importance comparable to that of those factors inhibiting a degree of homogeneity, and have high risks of impairing the function of glass. Those factors are fluctuations in degree of homogeneity in the long-range order of a glass structure caused by the offset of a specific constituent in a glass composition.

Such heterogeneous sites in glass such as a cord and a knot can be optically grasped. Therefore, a degree of optical homogeneity has been defined by representing the quality of glass through the measurement of a refractive index or the like with high accuracy (see e.g. JP 06-345442 A, JP 10-265226 A, JP 2002-338255 A).

However, the degree of optical homogeneity of glass and the degree of homogeneity of the composition of the glass do not necessarily coincide with each other. For example, a value for the refractive index of glass used as an indication for the degree of optical homogeneity of the glass can be intentionally changed by adjusting conditions under which heated and shaped glass is cooled. That is, even when two glasses to be compared with each other have different glass compositions, appropriately adjusting a cooling rate can change the refractive indices of the two glasses to the same value. In addition, even when two glasses to be compared with each other have the same composition, intentionally adjusting a stress steadily acting on each of the glasses can make the two glasses different from each other in refractive index. For example, some commercially available optical glasses have the same refractive index and different compositions. Therefore, measuring only the refractive index of two glasses to be compared with other does not correspond to a comparison between the degrees of homogeneity of the glasses, and merely evaluates the glasses for optical homogeneity.

Meanwhile, it has been requested to manage various high-performance glass products requested to satisfy multiple high-order requirements such as precise dimensional accuracy as well as high chemical durability in such a manner that the products have the same glass composition. For example, when one attempts to form a fine surface shape on a glass surface through an etching treatment or the like, the glass surface must be eroded at the same etching rate. This is because a slight deviation in glass composition caused by a reduction in degree of homogeneity affects the amount of a surface to be eroded by etching per unit time, thereby being responsible for the inhibition of the realization of a precise shape. In order to realize a high level of homogeneity of composition, in addition to the above refractive index the measurement of multiple physical properties has been performed.

Furthermore, a tracer method is used as means for confirming a homogeneous production condition at a melting stage or as one promising method of evaluating a glass melting furnace for flow property. The method involves: adding a trace amount of a metal oxide having a glass coloring action such as cobalt oxide as a tracer to a glass raw material or mixing lead oxide that can be analyzed in a trace amount as a tracer without any coloring; and evaluating such tracer for manner in which the tracer flows into a glass product with time. Thus, the thermal hysteresis of molten glass inside a glass melting furnace or the degree of mixing due to stirring, that is, the degree of homogeneity can be detected. However, a glass melting furnace is provided with a small number of openings for improving thermal efficiency at the time of operation at high temperatures, so it is difficult to incorporate a predetermined amount of tracer into molten glass at an arbitrary position inside the melting furnace. In addition, there arises a problem in that the tracer method cannot be performed very frequently because the method involves the occurrence of the unexpected coloring of a glass product, a change in physical property of glass due to the mixing of a heavy element, or the like.

In a method of fining glass melts by fusing a glass composition in an atmosphere in which helium is subtantially absent, gaseous helium is passed into the molten glass thuch that the helium diffuses through the glass and into the seeds whereby the seeds become expanded and permitted to rise through the molten glass (US-A 3,622,296, US-A 3,929,440, DE-A 197 46 715, EP-A 1 473 284).

It is the object of the present invention to provide a method of producing a glass article in which the degree of homogeneity is properly evaluated.

In a method of producing a glass article comprising the steps of:
melting a glass raw material by heating;
homogenizing the molten glass;
forming the molten glass into a predetermined shape; and
cooling the formed glass article to room temperature,
according to the invention for evaluating the degree of homogeneity of the molten glass
   - the molten glass is brought into contact with a helium gas in which a volume ratio of an isotope of helium with a mass number of 3 to an isotope of helium with a mass number of 4 (0°C, 1 atm) is smaller than a volume ratio of the isotope of helium with a mass number of 3 to the isotope of helium with a mass number of 4 present in the atmosphere (0°C, 1 atm),
   - a plurality of glass samples is collected with time or spatially from the molten glass,
   - the volume ratio of the isotope of helium with a mass number of 3 to the isotope of helium with a mass number of 4 included in the plurality of glass samples is measured,
   - and the degree of homogeneity of the molten glass is measured by using the volume ratio of the glass samples as an indicator for the degree of homogeneity.

According to a preferred embodiment of the invention the molten glass is brought into contact with a helium gas in which a volume ratio of the isotope of helium with a mass number of 3 to the isotope of helium with a mass number of 4 in the glass article is 0.8 × 10⁻⁶ or less (0°C, 1 atm) and a total content of the isotope with a mass number of 4 and the isotope with a mass number of 3 in the glass is 5.0 × 10⁻⁵ to 2 µl/g (0°C, 1 atm).

In a further embodiment of the invention the molten glass is brought into contact with a helium gas in which the volume ratio of the isotope of helium with a mass number of 3 to the isotope of helium with a mass number of 4 in the glass article is in a range of 1.0 × 10⁻⁹ to 0.8 × 10⁻⁶.

The value for the volume ratio ³He/⁴He more preferably falls within the range of 0.5 × 10⁻⁸ to 0.8 × 10⁻⁶, or more preferably falls within the range of 0.5 × 10⁻⁸ to 5 × 10⁻⁷.

Helium (He) is classified into a category called a noble gas or an inert gas. The atomic structure of helium is a structurally stable closed-shell structure, and helium is present as a monoatomic molecule. Helium is the lightest element of the noble gas elements, and its atoms are of extremely small size, with very small attraction due to Van der Waals forces.

Six kinds of isotopes of helium (He) each having a mass number ranging from 3 to 8 have been identified. Only the following two isotopes of helium are stable and well known: ⁴He as an isotope with a mass number of 4 (a proton number of 2, a neutron number of 2, and an electron number of 2) and ³He as an isotope with a mass number of 3(a proton number of 2, a neutron number of 1, and an electron number of 2). In the atmosphere, the ratio of the isotope with a mass number of 3 (³He) to the isotope with a mass number of 4 (⁴He) is 1.4×10⁻⁶(=1.4ppm) . The volume ratio of ³He to ⁴He (hereinafter, the volume ratio is referred to as ³He/⁴He) of helium in the glass composition of the present invention is smaller than the volume ratio ³He/⁴He of helium present in the atmosphere. Incorporating helium having a volume ratio ³He/⁴He smaller than that of helium in the atmosphere into a glass article makes it possible to clearly distinguish between helium in the glass article and helium eluted from the atmosphere into molten glass in the production step of the glass article.

The value for the volume ratio ³He/⁴He is suitably reduced in order that a difference between the value and that of helium in the atmosphere may be acknowledged with improved ease. From such viewpoint, the value for the volume ratio ³He/⁴He is preferably 1.3 × 10⁻⁶ (0°C, 1 atm) or less, more preferably 1.2 × 10⁻⁶ (0°C, 1 atm) or less, morepreferably 1.1 × 10⁻⁶ (0°C, 1atm) or less, morepreferably 1.0 × 10⁻⁶ (0°C, 1 atm) or less, or more preferably 0.8 × 10⁻⁶ (0°C, 1 atm) or less.

A difference in mass number between ³He and ⁴He, and the volume ratio ³He/⁴He can be compared through analysis by means of, for example, a mass spectrometer. Therefore, whether helium of interest originates from the atmosphere can be made clear through analysis. Furthermore, it is acknowledged that ³He and ⁴He are different from each other in not only mass number but also physical property such as a vapor pressure. Therefore, adopting an analysis approach based on such difference in physical property can analyze a ratio between them. When mass spectrometry or the like is adopted as means for measuring the amount of the isotopic element with a mass number of 3 and that of the isotopic element with a mass number of 4, for example, a glass sample may be subjected to pulverization, dissolution, laser extraction, or the like.

Although helium is not involved in the formation of the network structure of glass in glass composition, incorporating 5.0 × 10⁻⁵ µl/g or more of helium into the glass composition enables a ratio of the isotope with a mass number of 3 (³He) or the isotope with a mass number of 4 (³He) to helium in the glass to be specified with reliability by means of a mass spectrometer or the like. In addition, the above content of helium promotes the clarification of a fine air bubble remaining in molten glass. On the other hand, in a state where a large amount of helium is incorporated into glass, particularly when helium is used in applications where glass that has been shaped once is heated again, helium may be responsible for reboiling. Therefore, the total content of helium in a glass composition is preferably 2 µL/g (0°C, 1 atm) or less.

The steps of the method according to the invention may be mutually continuous steps, or may be steps independent of each other. For example, heated and molten glass may be quenched to create a cullet, and the step of homogenizing molten glass obtained as a result of remelting of the produced cullet may be performed in another facility. That is, means for promoting homogenization by means of a rough melt cullet can be used in combination . Furthermore, the following procedure is on the extended line of this thought. That is, multiple kinds of glasses having different compositions may be created as quench glasses, and they may be appropriately mixed at a stage of remelting them. In such case, the values for the volume ratio ³He/⁴He of multiple kinds of glasses are intentionally caused to differ from each other, and a value for the volume ratio ³He/⁴He of glass obtained by mixing the glasses is confirmed. Thus, the fact that homogeneous mixing has been performed can be confirmed.

In addition, the step of melting a glass raw material by heating may adopt any method as its heating means without a hitch. For example, a heating method based on a burner using a liquid or gas fuel or the like, a heating method indirectly or directly utilizing electricity, an electromagnetic wave such as infrared light, or the like can be adopted. Furthermore, a natural raw material, an artificially purified product, or the like can be used as the glass raw material. Of course, a glass cullet can also be used. Furthermore, any one of various mixing operations can be adopted for the step of homogenizing molten glass. Examples of the operations include stirring by means of a stirrer, bubbling, and an ultrasonic wave.

The method of bringing the molten glass into contact with helium is not particularly limited. The bubbling of a helium gas into molten glass, or the diffusion of helium based on the fact that a helium gas as a melting atmosphere is held above molten glass can be adopted. Furthermore, a predetermined amount of helium may be incorporated into a cullet to be used as a glass raw material in advance.

The above result of the evaluation is caused to be reflected in the setting or change of various conditions of a facility for melting glass or the like, whereby an optimum production condition capable of improving the degree of homogeneity of the glass can be adopted.

The conditions of a melting facility or the like include: conditions under which a raw material is prepared such as a temperature, the concentration of an atmosphere in a furnace, a pressure, the rate at which a raw material is loaded, pulverization, and granulation; the rate at which a product is shaped; a bubbling rate; a bubbling gas concentration; the rotational speedof a stirrer; and the amount of a glass cullet to be used.

In addition, the melting and homogenization of molten glass based on the evaluation for degree of homogeneity may adopt, for example, a method involving: directly coupling a melting facility with a facility for measuring the above volume ratio; and reflecting in real time the measured value in a condition under which a furnace is operated. Alternatively, a method involving: measuring the above volume ratio by means of various methods in an environment separated from a melting facility; and changing a production condition for glass on the basis of the result may be adopted.

Setting the value for the volume ratio ³He/⁴He to be equal to or more than 1.0 × 10⁻⁹ enables the presence of helium with a mass number of 3 to be detected surely, so a preferred result can be obtained. On the other hand, the above value for the volume ratio ³He/⁴He is preferably set to be equal to or less than 0.8 × 10⁻⁶ because the value can be clearly distinguished from the value for the volume ratio ³He/⁴He in the atmosphere. The value for the volume ratio ³He/⁴He falls within the range of more preferably 0.5 × 10⁻⁸ to 0.8 × 10⁻⁶, or still more preferably 0.5 × 10⁻⁸ to 5 × 10⁻⁷.

The present invention exerts the following effects.
(1) As described above, molten glass is brought into contact with a helium gas in which the volume ratio of the isotope of helium with a mass number of 3 to the isotope of helium with a mass number of 4 (0°C, 1 atm) is smaller than that of the isotope of helium with a mass number of 3 to the isotope of helium with a mass number of 4 in the atmosphere (0°C, 1 atm). Volume ratios of helium isotopes in multiple glass sampling samples collected with time or spatially from molten glass melted in a melting facility are measured, and the measured values are compared as an indicator for degree of homogeneity.
(2) The homogeneity of the glass obtained according to the present invention can be confirmed with improved ease as long as the volume ratio of the isotope of helium with a mass number of 3 to the isotope of helium with a mass number of 4 in the composition is 0.8 × 10⁻⁶ or less (0°C, 1 atm) because this volume ratio is clearly different from the volume ratio between helium isotopes originating from helium species present in the air. In addition, grasping the dispersed state of helium into glass with improved accuracy enables a function which is realized by predetermined glass composition and which is needed for its application to be achieved with high reliability.
(3) As long as the total content of the isotope of helium with a mass number of 4 and the isotope of helium with a mass number of 3 in the glass composition of the present invention is 5.0 × 10⁻⁵ to 2 µl/g (0°C, 1 atm), a ratio of the isotope of helium with a mass number of 3 (³He) to the isotope of helium with a mass number of 4 (³He) in the glass article can be specified as a value having high reliability by means of any one of various measuring machines such as a mass spectrometer.
(4) The glass obtained by the method of the present invention is applicable to a wide variety of applications as long as it is an oxide multicomponent-based glass or a silicate glass. The homogenization of the composition of a glass article can be confirmed, for example, even when the glass article has such shape or dimensions that a high-accuracy method measuring the degree of optical homogeneity is hardly adopted, when the glass article contains a large amount of coloring component, or when the glass article is of composition involving crystallization.
(5) As long as the glass obtained by the method of the present invention has a transmittance for a thickness of 1.0 mm of 99.9% or less with respect to a light beam having a predetermined wavelength within the wavelength range of 200.0 nm to 1,050.0 nm, the glass has compositional homogeneity as well as optical homogeneity specified by a method for evaluation for degree of homogeneity of a refractive index or the like, so the glass can realize various stable physical properties needed for a functional material having high performance.
(6) As long as the glass obtained by the method of the present invention is used in applications where the glass is sealed with a member composed of one material selected from the group consisting of a glass, a ceramic, and a metal under heat, identical, stable performance can be realized for the shape of a sealing site and for physical and chemical functions after sealing because the glass composition is a material having compositional homogeneity.
(7) As long as the glass obtained by the method of the present invention is the result of precipitation of a crystal inside glass and/or on the surface of the glass, a defective site having brittle strength hardly occurs, so excellent performance can be realized.
(8) In the method of the present invention, monitoring the degree of homogeneity of glass by means of the above volume ratio as an indicator enables one to take measures to correct various fluctuation factors in glass production quickly. Thus, even when a compositionally heterogeneous portion occurs in glass irregularly in a glass production site, measures to dissolve the problem can be taken quickly, so a glass article having high degree of homogeneity can be produced continuously.
(9) In addition, the method of producing a glass article of the present invention can realize the homogenization of a glass article through the adoption of a tracer which does no harm to the environment and does not color the glass article even when it is mixed into the glass article.

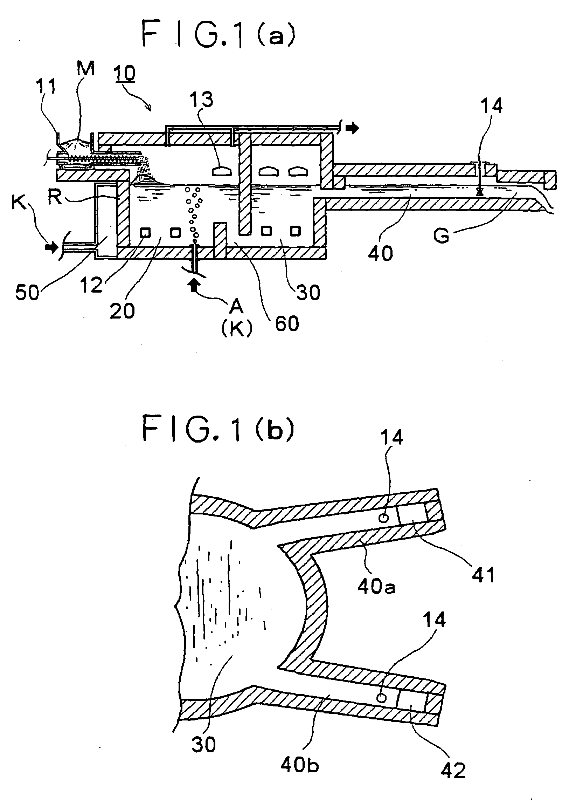

In the drawing explanatory views of a glass melting furnace are shown in which a production method of the present invention is performed. Fig. 1 (a) is a sectional view and Fig. 1 (b) is a plan view of a main portion of the glass melting furnace.

### [Example 1]

By means of example 1 a general procedure for producing a glass article (without, however, comprising all steps of the homogeneity evaluating procedure according to the invention) is exemplified. Table 1 shows 12 samples used in this example 1. The glass compositions of Table 1 are for use in: a fine tubular glass for an electronic component; a thin-plate glass for an FPD; a glass for blocking radiation; a medical glass; a material glass for crystallized glass; or a glass fiber for an FRP, and is an oxide multicomponent-based silicate glass. For any sample, each of multiple glass raw materials such as an oxide was weighed in advance, and the materials were mixed by means of a small rotary raw material mixer in such a manner that raw material segregation or the like would not occur, to thereby create a glass raw material batch. After that, the glass raw material batch was thrown in a high-temperature-heat-resistant container having an internal volume of 1, 000 cc and made of a platinum alloy (a platinum-rhodium 15% container), and melting was performed in a closed electric furnace for a melting time of 16 hours under a temperature condition managed in such a manner that each glass composition would have a viscosity smaller than 1 × 10³ dPa·sec (temperatures from 1,480°C to 1,600°C). Then, the raw material batch was melted through a high-temperature chemical reaction to complete vitrification. From the time point 2 hours after the completion, the cock of a gas-introducing tube inserted into the closed electric furnace was opened, and a helium gas having a volume ratio of the isotope with a mass number of 3 to the isotope with a mass number of 4, that is, ³He/⁴He adjusted in advance to be equal to or less than 0.8 × 10⁻⁶ or less (for example, 1.0 × 10⁻⁷) was introduced into the atmosphere in the furnace above molten glass, thereby the helium gas was introduced into glass through diffusion into the molten glass. Then, each glass was subjected to a treatment for diffusing helium for at least 5 hours. Furthermore, the molten glass was homogenized through a stirring operation by means of a stirrer for molten glass attached to the inside of the furnace. After that, the molten glass was flown into a carbon frame. After that, the glass was held in a slow cooling furnace. After 2 days of slow cooling operation, the temperature of the glass was reduced to room temperature, and a helium content in the resultant glass, and a volume ratio of the isotope with a mass number of 4 to the isotope with a mass number of 3 for the helium were measured, i.e. one measuring value of helium content and isotope ratio for each sample (see the two last lines in Table 1) . In addition, the composition of the glass was confirmed by using wet chemical analysis and instrumental analysis in combination. Thus, it was confirmed that the glass was of target composition. Table 1 summarizes the above results.

For each measured value, a method of measuring helium involves: collecting 10 to 500 mg of sample from a glass piece cooled to room temperature; loading the glass into an Mo crucible of a furnace heated to 1,600°C; holding the glass in the crucible for 20 minutes; subjecting a generated gas to vacuum extraction; introducing the resultant into a mass spectrometer; ionizing He in the device; separating isotopes by means of a magnetic field; detecting an ion by means of a Faraday cup; and amplifying the detected ion by means of an amplifier. The device used for the analysis is a double collector-type noble gas mass spectrometer manufactured by Micromass. In addition, the ICP light emission analyzer used for composition analysis is an SPS 1500VR manufactured by Seiko Instruments Inc. with which a secondary electron multiplier (SEM) is mounted for an improvement in measurement sensitivity. One analysis required about 0.5 g of glass.

**Table 1**

| Sample No. | 1 | 2 | 3 | 4 | 5 | 6 | 7 | 8 | 9 | 10 | 11 | 12 |
|---|---|---|---|---|---|---|---|---|---|---|---|---|
| (mass%) SiO₂ | 71.2 | 66.3 | 34.1 | 72.6 | 62.9 | 65.0 | 59.3 | 79.5 | 62.9 | 66.8 | 54.5 | 57.3 |
| PbO | - | - | 54.6 | - | - | - | - | - | - | - | - | 28.8 |
| Al₂O₃ | 1.9 | 22.5 | - | 6.9 | 3.0 | 16.1 | 15.4 | 2.6 | 15.7 | 11.3 | 13.8 | 1.1 |
| B₂O₃ | 0.8 | - | 3.0 | 10.2 | 8.1 | 9.9 | 9.5 | 13.5 | 10.2 | 11.2 | 7.3 | - |
| MgO | - | 0.7 | - | - | - | - | - | - | 1.2 | 2.4 | 2.3 | - |
| CaO | - | - | 0.4 | 0.5 | 0.3 | 8.0 | 5.6 | - | 6.5 | 4.3 | 21.0 | - |
| SrO | 1.0 | - | - | - | - | 1.0 | 5.6 | - | 0.9 | 2.1 | 0.1 | - |
| BaO | 5.8 | - | 5.1 | 2.1 | 1.3 | - | 3.6 | - | 0.5 | 1.5 | 0.3 | - |
| ZnO | - | - | - | - | 6.9 | - | 0.5 | - | 1.8 | 0.2 | - | - |
| Li₂O | 2.8 | 4.0 | - | - | - | - | - | - | - | - | - | - |
| Na₂O | 4.1 | 0.4 | 0.4 | 6.4 | 6.8 | - | - | 4.3 | - | - | 0.2 | 3.5 |
| K₂O | 9.4 | 0.2 | 1.9 | 1.3 | 6.9 | - | - | - | - | - | 0.1 | 8.8 |
| Fe₂O₃ | 3.0 | 0.1 | - | 0.1 | - | - | - | - | - | - | 0.2 | 0.0 |
| P₂O₅ | - | 1.4 | - | - | - | - | - | - | - | - | - | - |
| ZrO₂ | - | 2.5 | - | - | - | - | - | - | - | - | - | - |
| SnO₂ | - | 1.9 | - | - | - | - | - | - | 0.1 | - | - | - |
| TiO₂ | - | - | - | - | 3.3 | - | - | - | - | - | 0.2 | - |
| Sb₂O₃ | - | - | 0.50 | 0.03 | 0.50 | - | 0.50 | - | 0.10 | 0.20 | - | 0.50 |
| Cl₂ | - | - | - | - | - | - | - | 0.1 | 0.1 | - | - | - |
| (×10⁻³: µl/g) He | 222.1 | 124.1 | 107.7 | 78.1 | 0.2 | 2.1 | 47.4 | 562.1 | 53.1 | 10.0 | 24.5 | 34.1 |
| (×10⁻⁷) ³He/⁴He | 1.01 | 0.93 | 0.92 | 0.94 | 1.23 | 1.05 | 2.77 | 2.21 | 1.42 | 2.91 | 0.98 | 2.63 |

Table 1 confirmed that each of the glasses (Sample No. 1 to Sample No. 12) had a value for the volume ratio ³He/⁴He in the range of 0.92 × 10⁻⁷ to 2.91 × 10⁻⁷ , had a helium content in the glass in the range of 0.2 × 10⁻³ microliter (µl)/g to 562.1 × 10⁻³ µl/g, and showed no reduction in degree of homogeneity of glass judged from the observation of the external appearance of a bubble, a cord, or the like.

### [Example 2]

Next, the method of producing glass of the present invention will be described in accordance with a case applicable to an actual glass melting furnace. FIGS. 1(a), 1(b) show a sectional view of a glass melting furnace to which the production method of the present invention is applied. In the glass melting furnace 10, a glass raw material M of multicomponent-based silicate glass is continuously loaded from a raw material loading machine 11 installed in a melting chamber 20, and is heated with a burner 13 and an electrode 12 arranged in the melting chamber 20 to be molten glass G. Then, the molten glass G is subjected to a homogenizing operation with an air bubbling A in the melting chamber 20. After that, the resultant is defoamed in a clarifying chamber 30 via a throat 60. After that, the resultant is molded into plate glass at two sites simultaneously: a molding portion 41 and another feeder molding portion 42 at the tips of a feeder 40 bifurcating from the clarifying chamber 30. The molten glass G is sufficiently mixed by means of arranged stirrers 14 in such feeder. The amount of a glass molded article to be molded in the molding portion 41 and that in the molding portion 42 were substantially equal to each other (50 ton/day), and the molding portions were able to produce 100 ton/day together. However, in the glass melting furnace 10, the quality of a glass article molded was recognized as being problematic from an initial stage of glass production. To be specific, in the molding portion 41, bubble quality was excellent and an efficiency percentage was high. On the other hand, in the molding portion 42, bubble quality was always bad.

In view of the foregoing, a helium gas was arranged in such a manner that a helium gas would be sprayed into the entire surface of a refractory R on a wall on the side of the melting chamber 20 below the glass raw material loading machine 11, and helium in the helium diffusion chamber 50 was kept to be always in a pressurized state. Thus, helium was scattered from a gap of the refractory R or the like into the molten glass G. Then, the values for the volume ratio ³He/⁴He in the molding portions 41 and 42 were pursued and investigated. That is, the time required for the value for the volume ratio ³He/⁴He to be 0.8 × 10⁻⁶ or less was determined. As a result, in the molding portion 41, it took 16 hours for the value to be 0.8 × 10⁻⁶ or less. However, in the molding portion 42, it took 13 hours for the value to be 0.8 × 10⁻⁶ or less. Therefore, it was shown that there was a difference of 3 hours in time for the value to be 0.8 × 10⁻⁶ or less between the molding portions 41 and 42. This showed that, in the molding portion 42, short-path glass flow (also referred to as quick flow) in which the molten glass G flew out without being sufficiently dissolved and clarified was formed in the clarifying chamber 30, the feeder 40, and the like.

In view of the foregoing, in order to alleviate the phenomenon, measures were taken regarding a series of problems such as temperature conditions for the melting chamber 20 and the clarifying chamber 30, the interval at which a glass raw material was loaded, and a bubbling condition. As a result, bubble quality in the molding portion 42 was improved to be comparable to that in the molding portion 41. In this state, the value for the volume ratio ³He/⁴He was measured again in the same manner as that described above for confirmation. As a result, the time required for the value for the volume ratio ³He/⁴He in the molten glass to be 0.8 × 10⁻⁶ or less was 15 hours in the molding portion 41, and was 14.8 hours in the molding portion 42. Therefore, it was confirmed that the molding portions were in substantially the same glass flow state.

### [Example 3]

Next, the method of producing glass of the present invention was applied to a glass melting furnace having substantially the same structure as that of FIG. 1 and having a glass production amount of 65 ton/day. Here, a gas to be supplied from a bubbling site of FIG. 1 was switched from air A to helium K having a value for the volume ratio ³He/⁴He prepared in advance. 3 days after the switching of the bubbling gas, the molten glass G was collected from the inside of the glass melting furnace. The value for the volume ratio ³He/⁴He in the collected glass and that in a glass product cooled after molding were compared with each other. As a result, the value for the volume ratio ³He/⁴He of the molten glass in the furnace collected from the vicinity of the bubbling site of the melting chamber 20 was 0.2 × 10⁻⁶ while the value for the volume ratio ³He/⁴He of the molten glass in the furnace in front of the throat 60 was 0.3 × 10⁻⁶. Furthermore, the value for the volume ratio ³He/⁴He of the product molded as plate glass was 0.2 × 10⁻⁶.

The molten glass G in the furnace near bubbling and the glass product had the same value for the volume ratio ³He/⁴He. Therefore, it was observed that the lapse of 3 days caused the molten glass G that had been in the furnace at the time of initiation of helium bubbling to flow out to be a product. On the other hand, the value for the volume ratio ³He/⁴He of the molten glass G in the furnace in front of the throat in the furnace was relatively high, so a change in value for the volume ratio ³He/⁴He was found to be slow. That is, there was suggested a possibility that the molten glass G did not flow out at a site in front of the throat, a residence region was formed, and the glass was exposed to a high-temperature environment over a long time period, so the glass became dissimilar glass.

In the glass melting furnace, a plate glass for a flat panel display has been produced so far. However, the presence of a heterogeneous site caused by dissimilar glass called a cord has been observed in the produced plate glass. Although a cause for a problem such as a low efficiency percentage has been clear, it has not been clear that what kind of matter should be treated in what kind of manner in order to obtain a good result. Accordingly, trial and error have been repeated. However, a source for the problem has been specified on the basis of the result. Therefore, measures have been taken to the problem. Several days after that, a glass state in which a cord has been significantly alleviated has been established, so it has become possible to produce glass having high degree of homogeneity.

One week after the time point at which it has become possible to produce a plate glass having high degree of homogeneity, molten glass was collected from inside the glass melting furnace under a stable condition, and the value for the volume ratio ³He/⁴He in the collected glass and that in a glass product cooled after molding were compared with each other. As a result, no such offset of the value for the volume ratio ³He/⁴He as described above was observed, and a correlation between the value and the homogeneity of glass was confirmed. In this case as well, the value for the volume ratio ³He/⁴He was measured by means of the same mass spectrometer as that described above.

### [Example 4]

Next, the evaluation of a tubular glass for an electronic component to be used for a xenon flash lamp performed at an initial stage of the present invention will be described below.

The fine tubular glass to be used for the xenon flash lamp is an oxide multicomponent-based silicate glass having 76 mass% SiO₂, 1 mass% Al₂O₃, 16 mass% B₂O₃, 1 mass% MO (M = Sr + Ca + Mg) , and 6 mass% R₂O (R = Na + K + Li). The glass is a material having an internal transmittance (for a thickness of 1 mm) of 95% to 99.9% in the wavelength range of 400 nm to 800 nm because the glass is used for lamp applications. However, it has been pointed out that the glass material has a large boric acid content and a large evaporation rate of a glass component upon melting, so a heterogeneous, dissimilar glass site of glass such as a cord is apt to occur, the glass material is hardly melted, and glass having homogeneous composition is hardly produced.

In view of the foregoing, in order to test the present invention, a helium gas having a value for the volume ratio ³He/⁴He adjusted in advance was introduced into a furnace by means of bubbling while melting conditions such as temperature and atmospheric condition were changed. Then, the selection of an optimum condition out of various melting conditions was attained by measuring the value for the volume ratio ³He/⁴He of helium according to the invention. As a result, the selection enabled a rejection rate due to cord insufficiency that had been conventionally observed to alleviate by 2%. It should be noted that the value for the volume ratio ³He/⁴He in glass to be finally obtained was small as compared to that of melting in the ordinary atmosphere, and its lower limit was 0.85 × 10⁻⁶ (0°C, 1 atm).

## Claims

1. A method of producing a glass article comprising the steps of:
melting a glass raw material by heating;
homogenizing the molten glass;
forming the molten glass into a predetermined shape; and
cooling the formed glass article to room temperature,
**characterized in that** for evaluating the degree of homogeneity of the molten glass
- the molten glass is brought into contact with a helium gas in which the volume ratio of the isotope of helium with a mass number of 3 to the isotope of helium with a mass number of 4 (0°C, 1 atm) is smaller than the volume ratio of the isotope of helium with amass number of 3 to the isotope of helium with a mass number of 4 present in the atmosphere (0°C, 1 atm),
- a plurality of glass samples is collected with time or spatially from the molten glass,
- the volume ratio of the isotope of helium with a mass number of 3 to the isotope of helium with a mass number of 4 included in the plurality of glass samples is measured,
- and the degree of homogeneity of the molten glass is measured by using the volume ratio of the glass samples as an indicator for the degree of homogeneity.

2. A method of producing a glass article according to claim 1, **characterized in that** the molten glass is brought into contact with a helium gas in which the volume ratio of the isotope of helium with a mass number of 3 to the isotope of helium with a mass number of 4 in the glass article is 0.8 × 10⁻⁶ or less (0°C, 1 atm) and a total content of the isotope with a mass number of 4 and the isotope with a mass number of 3 in the glass is 5.0 × 10⁻⁵ to 2 µl/g (0°C, 1 atm) .

3. A method of producing a glass article according to any one of claims 1 or 2, **characterized in that** the molten glass is brought into contact with a helium gas in which the volume ratio of the isotope of helium with a mass number of 3 to the isotope of helium with a mass number of 4 in the glass article is in a range of 1.0 × 10⁻⁹ to 0.8 × 10⁻⁶.

## Patentansprüche

1. Verfahren zur Herstellung eines Glasgegenstands, enthaltend die folgenden Schritte:
Schmelzen eines Glasrohmaterials durch Erwärmen,
Homogenisieren des geschmolzenen Glases,
Formen des geschmolzenen Glases in eine vorgegebene Gestalt und
Abkühlen des geformten Glasgegenstands auf Raumtemperatur,
**dadurch gekennzeichnet, dass** zum Beurteilen des Homogenitätsgrads des geschmolzenen Glases
- das geschmolzene Glas in Kontakt mit einem Helium-Gas gebracht wird, bei dem das Volumenverhältnis des Heliumisotops mit Massenzahl 3 zum Heliumisotop mit Massenzahl 4 (0 °C, 1 atm) kleiner ist als das Volumenverhältnis des Heliumisotops mit Massenzahl 3 zum Heliumisotop mit Massenzahl 4 in der Atmosphäre ist (0 °C, 1 atm),
- zeitlich oder räumlich eine Vielzahl von Glasproben aus dem geschmolzenen Glas gesammelt wird,
- das Volumenverhältnis des Heliumisotops mit Massenzahl 3 zum Heliumisotop mit Massenzahl 4, enthalten in der Vielzahl von Glasproben, gemessen wird,
- und der Homogenitätsgrad des geschmolzenen Glases unter Verwendung des Volumenverhältnisses der Glasproben als ein Indikator fiir den Homogenitätsgrad gemessen wird.

2. Verfahren zur Herstellung eines Glasgegenstands nach Anspruch 1, **dadurch gekennzeichnet, dass** das geschmolzene Glas in Kontakt mit einem Helium-Gas gebracht wird, bei dem das Volumenverhältnis des Heliumisotops mit Massenzahl 3 zum Heliumisotop mit Massenzahl 4 im Glasgegenstand 0,8 × 10⁻⁶ oder weniger beträgt (0 °C, 1 atm) und ein Gesamtgehalt des Isotops mit Massenzahl 4 und des Isotops mit Massenzahl 3 im Glas 5,0 × 10⁻⁵ bis 2 µl/g (0 °C, 1 atm) beträgt.

3. Verfahren zur Herstellung eines Glasgegenstands nach einem der Ansprüche 1 oder 2, **dadurch gekennzeichnet, dass** das geschmolzene Glas in Kontakt mit einem Helium-Gas gebracht wird, bei dem das Volumenverhältnis des Heliumisotops mit Massenzahl 3 zum Heliumisotop mit Massenzahl 4 im Glasgegenstand im Bereich von 1,0 × 10⁻⁹ bis 0,8 × 10⁻⁶ liegt.

## Revendications

1. Procédé de production d'un article en verre, comprenant les étapes consistant à :
faire fondre une matière première verre par chauffage ;
homogénéiser le verre fondu ;
mettre le verre fondu en une forme prédéterminée, et
refroidir l'article formé en verre à température ambiante,
**caractérisé en ce que** pour évaluer le degré d'homogénéité du verre fondu :
- le verre fondu est mis en contact avec le gaz hélium, dans lequel le rapport volumique de l'isotope d'hélium ayant un nombre de masse de 3 à l'isotope d'hélium ayant un nombre de masse de 4 (0°C, 1 atm) est inférieur au rapport volumique de l'isotope d'hélium ayant un nombre de masse de 3 à l'isotope d'hélium ayant un nombre de masse de 4 dans l'atmosphère (0°C, 1 atm),
- une série d'échantillons du verre est collectée au cours du temps ou en différents endroits du verre fondu,
- le rapport volumique de l'isotope d'hélium ayant un nombre de masse de 3 à l'isotope d'hélium ayant un nombre de masse de 4 présent dans les différents échantillons de verre est mesuré, et
- le degré d'homogénéité du verre fondu est mesuré en utilisant le rapport volumique des échantillons de verre, comme un indicateur du degré d'homogénéité.

2. Procédé de production d'un article en verre selon la revendication 1, **caractérisé en ce que** le verre fondu est mis en contact avec le gaz hélium, dans lequel le rapport volumique de l'isotope d'hélium ayant un nombre de masse de 3 à l'isotope d'hélium ayant un nombre de masse de 4 dans l'article en verre est de 0,8 x 10⁻⁶ ou moins (0°C, 1 atm) et la teneur totale en l'isotope ayant un nombre de masse de 4 et en l'isotope ayant un nombre de masse de 3 dans le verre se situe à 5,0 x 10⁻⁵ à 2 µg/g (0°C, 1 atm).

3. Procédé de production d'un article en verre selon l'une quelconque des revendications 1 et 2, **caractérisé en ce que** le verre fondu est mis en contact avec le gaz hélium, dans lequel le rapport volumique de l'isotope d'hélium ayant un nombre de masse de 3 à l'isotope d'hélium ayant un nombre de masse de 4 dans l'article en verre se situe dans l'intervalle allant de de 1,0 x 10⁻⁹ à 0,8 x 10⁻⁶.
